# EUROPEAN PATENT APPLICATION

(11) **EP 2 988 543 A1**
(43) Date of publication of application: **24.02.2016**
(21) Application number: 14181613.2
(22) Date of filing: 20.08.2014
(51) Int. Cl.: H04W 24/10, H04B 7/02, H04B 7/06

(54) **Method and apparatus for measuring channel state information in a cellular network system using mimo**

(71) Applicant: DoCoMo Communications Laboratories Europe GmbH, 80687 München (DE)
(72) Inventor: Bazzi, Samer, 80687 Munich (DE); Ternon, Emmanuel, 80687 Munich (DE); Iwamura, Mikio, 80687 Munich (DE); Kusume, Katsutoshi, 80687 Munich (DE)
(74) Representative: Betten & Resch

(57) **Abstract**

A method and apparatus are presented for measuring channel state information in a cellular network system using MIMO, wherein a user equipment UE is connected to a first base station BS, and wherein the method comprises the steps of: informing the first BS about the respective number of antennas of one or more neighbouring BSs of said first BS; signalling the number of antennas of neighbouring BSs of said first BS from said first BS to said UE; receiving training pilot signals from said neighbouring BSs by said UE; performing channel state information CSI measurements based on said pilots received from said neighbouring BSs; feeding back the CSI to the first BS.

## Description

### FIELD OF THE INVENTION

The present technology relates to a method and apparatus for measuring channel state information in a cellular network system using MIMO.

### BACKGROUND OF THE INVENTION

Accurate channel state information (CSI) at the base stations (BSs) is necessary to perform cooperative beamforming / precoding and to mitigate inter-cell interference suffered by neighbouring UEs. In frequency-division-duplex (FDD) mode, the user equipment (UE) needs to feed back the required CSI to the corresponding BS as the BS cannot acquire the CSI by itself and this can result in a large feedback overhead. For cooperative beamforming approaches, the CSI to UEs in neighbouring cells has to be known at the BSs and this increases the feedback overhead at the UE side. One way to reduce the CSI feedback overhead is through the use of two-stage precoding. The second stage precoder has the role of compressing the number of training sequences / pilots sent by the BSs for CSI estimation. Consequently, the required CSI is also compressed. This results in a reduced CSI feedback overhead. The second stage precoder has the effect that the UE effectively "sees" a neighbouring BS with a number of "virtual" antennas, which is smaller than the actual number of physical antennas. Prior to implementing the two-stage precoding scheme, some information has to be available at the UE side, e.g., knowledge about the number of virtual antennas of the neighbouring BS in order to properly receive the training pilots coming from the neighbouring BS. Furthermore, network signalling and/or UE configuration procedures are necessary. These procedures specify the properties of the two-stage precoding scheme and enable the reception of the compressed pilots by the UEs on the right resources in addition to other steps.

At first, some terms used in the description will be defined in the following list of abbreviations.
- BS: base station
- CSI: channel state information
- FDD: frequency division duplex
- UE: user equipment

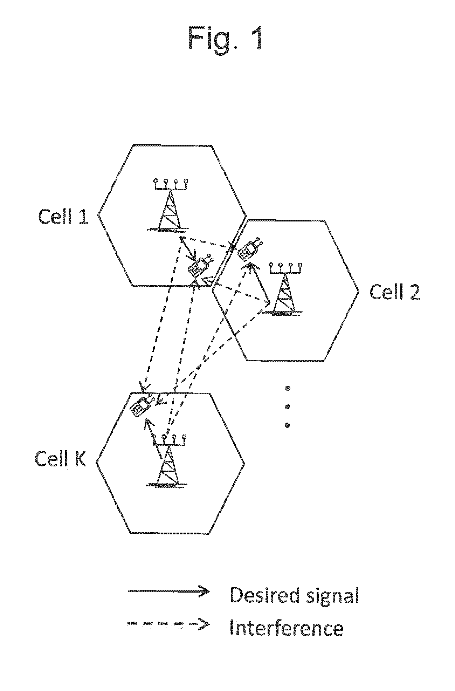

A target configuration is described with reference to Figure 1 as follows: A downlink transmission in a multi-cellular system is considered, as shown in Figure 1. The system operates in FDD mode. All cells have a frequency re-use factor of 1, which means cell-edge users suffer from a high level of interference coming from the neighbouring cells. A cooperative beamforming approach is therefore employed by the BSs, i.e., their beamformers or precoders are designed to mitigate the interference caused to cell-edge users. Finally, the BSs are equipped with a large number of antennas. When UEs are equipped with multiple antennas, this would be known as massive MIMO.

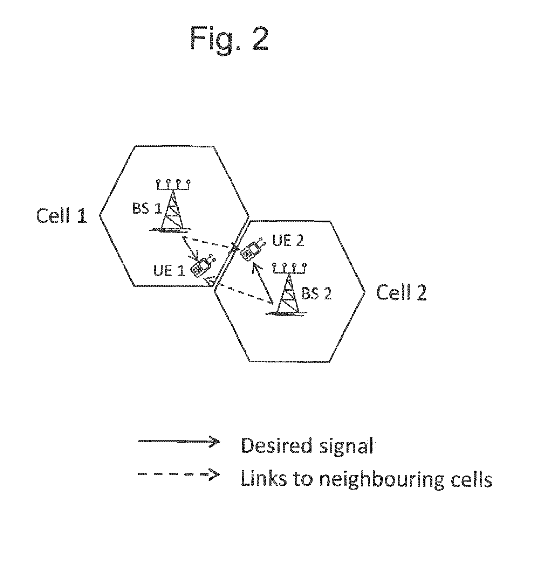

The challenges of cooperative beamforming combined with massive MIMO systems are two-fold and are described with reference to Figure 2 as follows:
1. Increased CSI feedback overhead at the UE side
2. Increased piloting overhead at the BS side

The reasons for these challenging effects are explained in the following: A cooperative beamforming design requires the knowledge of the CSI - the fading - across multiple cells. Consider a simplified scenario with two cells and one user equipment (UE) in each cell as shown in Figure 2. In a cooperative beamforming approach, BS 1 (respectively BS 2) designs its beamformer to mitigate or cancel interference caused to UE 2 (respectively UE 1) of the neighbouring cell. This requires BS 1 to know the CSI of the interfering link to UE 2. In FDD mode, the CSI is not known at the BSs and has to be first estimated and then fed back by the UEs. As a pilot symbol needs to be sent from each transmit antenna to the UE to perform channel estimation, the piloting overhead at the BS side increases in a massive MIMO setting. Second, the feedback of the CSI of interfering links by the UEs is an additional overhead which is added to the feedback overhead of the desired links. In a massive MIMO setting, this overhead increases as well as the CSI amount is proportional to the number of transmit antennas.

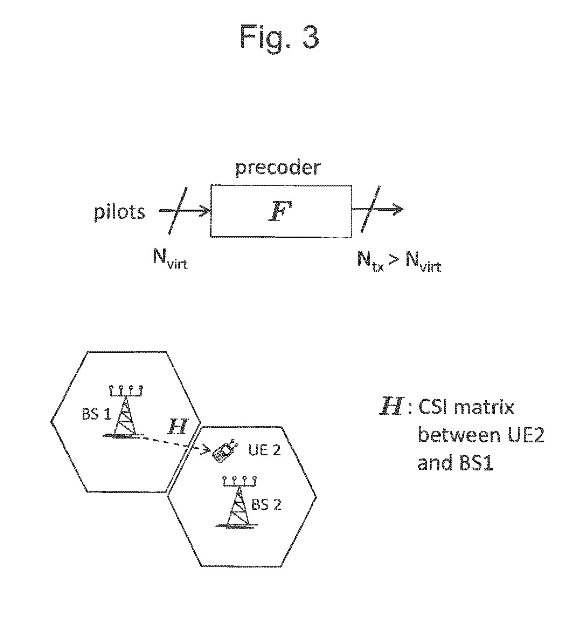

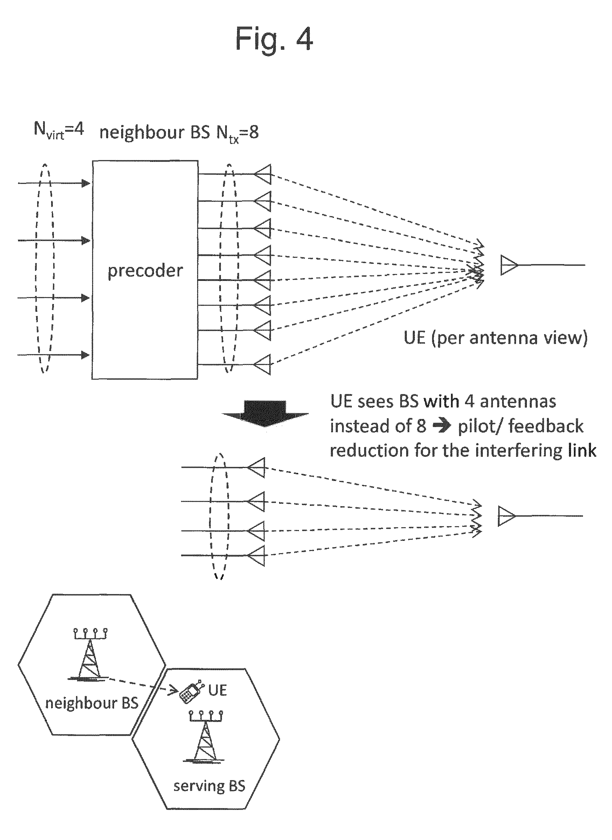

The state of the art in cooperative beamforming design and its limitations can be briefly summarized as follows: State-of-the-art methods precode pilots sent to UEs in neighbouring cells. This causes a reduction in CSI feedback in neighbouring cells. For example, if BS 1 has Nₜₓ physical antennas, it doesn't send Nₜₓ pilots (i.e., a pilot from each physical transmit antenna) for channel estimation to UE 2. Rather, a number Nᵥᵢᵣₜ < Nₜₓ pilots, Nᵥᵢᵣₜ being a number of virtual antennas, are precoded and "spread" over Nₜₓ physical antennas. This is shown in Figures 3 and 4: Figure 3 shows an example where BS 1 has Nₜₓ antennas. If the UE 2 is properly configured, which means that it would be aware of the number of Nᵥᵢᵣₜ of virtual antennas, it "sees" BS 1 with only Nᵥᵢᵣₜ virtual antennas and Nᵥᵢᵣₜ corresponding pilots, and it can receive those pilots on the corresponding resource blocks reserved for pilot estimation. In Figure 4, Nᵥᵢᵣₜ=4, and Nₜₓ=8.

Several problems arise here:
1. In the current standards, a UE doesn't know the number of antennas of a neighbouring BS. This is true for the number of physical antennas as well as the number of virtual ones.
2. The only available information to the UE in the standards is a binary value which indicates whether at least two antennas are used by a neighbouring BS. Note that this information is not enough as without specifying the exact number of antennas of a neighbouring BS, the UE cannot be configured to receive the compressed pilots on the resources blocks reserved for pilot estimation.
3. A UE (say UE 2) cannot communicate with a neighbouring BS (say BS 1) to obtain the number Nᵥᵢᵣₜ.

In addition, a proper configuration requires network signalling consisting of a measurement configuration (from which neighbour BS(s) to expect pilots, timing, conditions, resources, etc.).

### SUMMARY OF THE INVENTION

According to one embodiment, there is provided a method for measuring channel state information in a cellular network system using MIMO, wherein a user equipment UE is connected to a first base station BS, said method comprising: informing the first BS about the respective number of antennas of one or more neighbouring BSs of said first BS; signalling the number of antennas of neighbouring BSs of said first BS from said first BS to said UE; receiving training pilot signals from said neighbouring BSs by said UE; performing CSI measurements based on said pilots received from said neighbouring BSs; feeding back the CSI to the first BS.

This method has the advantage and effect that the number of antennas of neighbouring BSs can be known to said UE, so that said UE may receive training pilot signals correctly from neighbouring BSs to perform CSI measurements.

In one embodiment, the informing the first BS about the respective number of antennas of the one or more neighbouring BSs is done by signalling from the neighbouring BSs to the first BS preferably through a backhaul network, or by signalling through a central network controller or through Operation, Administration, and Management, OAM.

This has the advantage and effect that information on the number of antennas of neighbouring BSs can be communicated efficiently and in a timely manner among the base stations without involvement of UEs and without requiring additional radio resources, thereby enabling the channel estimation using precoding in case of massive MIMO. Furthermore, the signalling through a central network controller or through Operation, Administration, and Management, OAM, has the advantage, that the number of antennas may be provided as a parameter and may be configured manually, e.g., by an operator or technician.

In one embodiment, the method further comprises: signalling the number of antennas of neighbouring BSs of said first BS from said first BS to said UE on radio resource elements on which pilot signals are to be transmitted; receiving said training pilot signals from said neighbouring BSs by said UE on said radio resource elements signalled from said first BS to said UE.

This has the advantage and effect that the no additional signalling is necessary to make available the number of antennas of neighbouring BSs of said first BS to said UE.

In one embodiment, the signalling is performed using a radio resource control, RRC, protocol.

This has the advantage and effect that an existing protocol may be used for the signalling, thus facilitating integration of the method into an existing infrastructure.

In one embodiment, the signalled information includes one or more of the following: information indicating if pilots of neighbouring BSs should be measured; a cell ID for neighbouring BSs; a number of virtual antennas for neighbouring BSs; a measurement configuration; feedback channel information.

This has the advantage and effect that the measuring of pilots, and the generation and reporting of CSI information in the UEs may be controlled through the information being signalled.

In one embodiment, information about neighbouring BSs is signalled to the UE through layer 1 / layer 2 protocols, wherein the information includes one or more of the following: a measurement trigger; an identifier of the neighbouring BSs to be measured; information about when to expect pilots from neighbouring BSs; information on which radio resource elements to expect pilots from neighbouring BSs.

This has the effect and advantage that information about neighbouring BSs can be signalled frequently with little overhead to the UE, thus providing the UE with timely information about neighbouring BSs especially in dynamic and fast-changing scenarios.

In one embodiment, the resource elements for receiving the CSI of said neighbouring BSs are determined implicitly by the UE or are predefined, preferably using L1/L2 signalling for data allocation as implicit trigger.

This has the effect and advantage that no extra coordination is necessary to control and communicate the resource elements for receiving the CSI of said neighbouring BSs explicitly to said UE.

In one embodiment, the resource elements for feeding back the CSI to the first BS are determined implicitly by the UE or are predefined, preferably using L1/L2 signalling for data allocation as implicit trigger.

This has the effect and advantage that no extra coordination is necessary to control and communicate the resource elements for feeding back the CSI to the first BS explicitly to said UE.

In one embodiment, the number of antennas is a number of virtual antennas which is smaller than a number of physical antennas.

This has the effect and advantage that the measurement and the resources required to determine CSI in the UE are reduced, since only the number of virtual antennas of a neighbouring BS is considered by the UE.

In one embodiment, the CSI fed back to the first BS is a compact CSI based on a number of virtual antennas of a neighbouring base station, which is smaller than a CSI based on a number of physical antennas of the neighbouring base station.

This has the effect and advantage that the CSI can be more compact and thus the transmission of CSI from the UE to the first BS can be more efficient, thus reducing, e.g., the use of radio resources.

In one embodiment, the first BS transmits the received CSI from said UE through a backhaul network to neighbouring BSs.

This has the effect and advantage that the CSI can be more compact and thus the transmission of CSI from the first BS through the backhaul network to neighbouring BSs can be more efficient, thus reducing, e.g., the load on the backhaul network which connects the BSs.

In one embodiment, there is provided a user equipment for measuring channel state information in a cellular network system using MIMO, wherein the user equipment UE is connected to a first BS having one or more neighbouring BSs, said user equipment comprising: a module for receiving the number of antennas of said one or more neighbouring BSs from said first BS, which has received said number of antennas of said one or more neighbouring BSs; a module for receiving training pilot signals from said neighbouring BSs by said UE; a module for performing CSI measurements based on said pilots received from said neighbouring BSs and said number of antennas of said one or more neighbouring BSs received from said first BS; a module for feeding back the CSI to said first BS.

In this manner a user equipment can be implemented performing a channel estimation according to an embodiment of the invention.

In one embodiment, there is provided a first BS for measuring channel state information in a cellular network system using MIMO, wherein said first base station has one or more neighbouring BSs and is connected to a user equipment, said first base station comprising: a module for receiving the number of antennas of said one or more neighbouring BSs; a module for transmitting the received number of antennas of said one or more neighbouring BSs from said first BS to said UE to enable said UE to perform CSI measurements based on pilots received from said neighbouring BSs and said number of antennas of said one or more neighbouring BSs received from said first BS; a module for receiving CSI from said user equipment, which has performed CSI measurements based on said pilots received from said neighbouring BSs and said number of antennas of said one or more neighbouring BSs received from said first BS.

In this manner a base station can be implemented performing a channel estimation according to an embodiment of the invention.

In one embodiment, there is provided a computer program comprising computer program code which when being executed on a computer enables said computer to carry out the method for measuring CSI in a cellular network system using MIMO according to the previously described embodiments.

According to embodiments there is enabled the implementing of a preceding scheme by addressing the problem of providing information to the UE side, e.g., the knowledge of the number of antennas of the neighbouring BSs, in order to enable properly receiving by the UE the training pilots coming from the neighbouring BSs. Furthermore, in certain embodiments there is addressed the problem of providing the necessary network signalling and UE configuration procedures, which specify the properties of the precoding scheme and allow the reception of the compressed pilots by the UEs on the right resources in addition to other steps.

### DESCRIPTION OF THE DRAWINGS

Figure 1 shows an overview a multi-cellular system with a downlink transmission.
Figure 2 shows a simplified scenario with two cells and one user equipment in each cell.
Figure 3 shows a scenario where a number of Nᵥᵢᵣₜ pilots, Nᵥᵢᵣₜ being a number of virtual antennas, are precoded and "spread" over Nₜₓ physical antennas, wherein Nᵥᵢᵣₜ < Nₜₓ.
Figure 4 shows a scenario where a number of Nᵥᵢᵣₜ pilots, Nᵥᵢᵣₜ being a number of virtual antennas, are precoded and "spread" over Nₜₓ physical antennas, wherein Nᵥᵢᵣₜ < Nₜₓ.
Figure 5 shows a sequence diagram illustrating the steps and interaction between a serving BS and the UE before and after performing measurement and configuring CSI feedback.
Figures 6A and 6B show each scenarios where it is desirable and beneficial to vary, and in particular to increase, the number of virtual antennas dynamically.

### DETAILED DESCRIPTION

In the following, embodiments of the invention will be described. It should be noted that even if the embodiments described in the following use a number of virtual antennas instead a number of physical antennas, embodiments of the invention may also be implemented by transmitting the number of physical antennas of one or more neighbouring base stations rather than the number of virtual antennas.

In one embodiment there is measured channel state information in a cellular network system using MIMO. A UE is connected to a first BS, and this UE should be enabled to measure CSI using precoding signals from the neighbouring base stations of the first BS. For that purpose, however, the UE needs to know the number of antennas of the respective neighbouring BSs. According to one embodiment the respective number of antennas is signalled from one or more neighbouring BSs of said first BS to said first BS. Then the number of antennas of neighbouring BSs of said first BS is signalled from said first BS to said UE.

The UE then receives training pilot signals from the neighbouring BSs by said UE and performs CSI measurements based on said pilots received from the neighbouring BSs. Then the CSI is fed back to the first BS.

In this embodiment the CSI measurement is enabled even in case of massive MIMO by the transmission of the number of antennas from the neighbouring BSs to the first BS to which the UE is connected and from there to the UE, which then can perform CSI estimation based on training pilot signals used for precoding and based on the number of antennas of neighbouring BSs of the first BS.

Further embodiments will be described in the following.

In a first aspect of an embodiment, the proposed solution deals with signalling Nᵥᵢᵣₜ over the network. This takes place through a two-step signalling procedure:
1. A serving BS (say BS 2) should be informed of the number of antennas Nᵥᵢᵣₜ of neighbouring BSs (say BS 1). This can be done through the network for instance, wherein the network can be a backhaul network that connects the base stations.
2. The serving BS (say BS 2) then informs its UE (UE 2) of Nᵥᵢᵣₜ.

The number of antennas Nᵥᵢᵣₜ can be a number of virtual antennas which is smaller than a number of physical antennas.

The number of antennas Nᵥᵢᵣₜ of neighbouring BSs of said first BS may be signalled to the first BS also through a central network controller or through OAM.

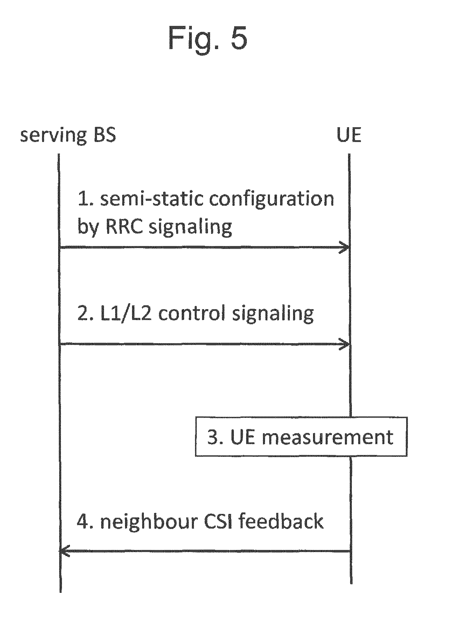

In a second aspect of an embodiment, the proposed solution specifies the steps of providing the measurement and feedback configuration taking place between the serving BS and the UE in its own cell, as shown in Figure 5.
1. The semi-static signalling done at the radio resource control (RRC) protocol layer includes the following information:
   - a flag indicating if pilots from neighbour cells should be measured;
   - a neighbour cell ID;
   - a value of *Nᵥᵢᵣₜ*;
   - a measurement configuration; and
   - a feedback channel configuration.
2. The layer 1 (L1) / layer 2 (L2) signalling includes the following information:
   - a measurement trigger; and
   - other information, e.g., when to expect the pilots from neighbouring BSs, on which resources blocks to expect the pilots from neighbouring BSs.

The trigger may take place on the Physical Downlink Control Channel (PDCCH) or the MAC control PDU. For example, L1/L2 signalling for data allocation may be used as implicit trigger.

After carrying out the measurement and feedback configuration, the UE can perform the CSI measurements according the signalling done at the RRC and feed back the CSI to the BS.

Semi-static signalling involves the RRC protocol, which is a layer 3 protocol, and thus has possibly some overhead for establishing an RRC connection. To avoid significant overhead, information which is signaled through RRC may not be sent or updated too frequently and thus signalling through RRC is called semi-static signalling. If very frequent updates and timely information is required, a dynamic configuration is possible as described in the following.

In case a dynamic configuration is desired, the above described steps in 1 and 2 of measurement and feedback configuration can be adapted. For instance, the signalling of the neighbour cell ID and Nᵥᵢᵣₜ may be moved to layers 1 and 2.

In the following, it is described how the value of Nᵥᵢᵣₜ is chosen. The previous section introduced a semi-static and a dynamic configuration. These configurations correspond to the procedure according to which Nᵥᵢᵣₜ is chosen. If Nᵥᵢᵣₜ is static and is chosen independently of the network configuration, then some scheduled UEs might still suffer from interference. The number of UEs which are served and at the same time are interference-free depends on the total number of UEs in the different cells scheduled on the same resource blocks in addition to the number of UE antennas. As an example, if each UE has a single antenna than each BS can serve N1 UEs in its own cell and null the interference to N2 UEs in neighbouring cells, under the condition that N1 + N2 = Nᵥᵢᵣₜ. N1 and N2 can be chosen according to the UE priorities and network demand as long as said condition holds.

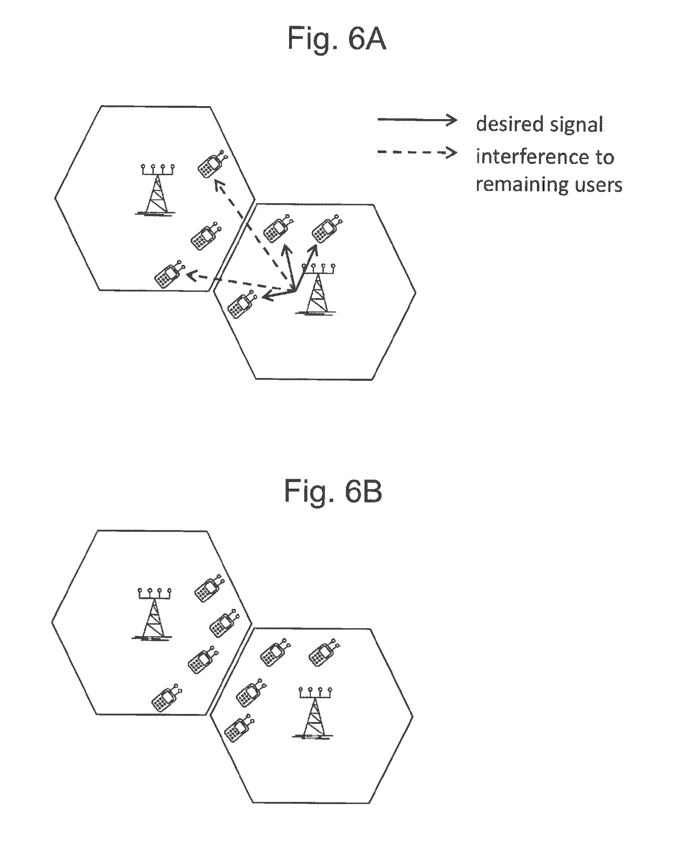

In the previous scenario, let N denote the total number of interference limited UEs in neighbouring cells. As N can be larger than N2, some UEs will still suffer from interference. Such a scenario is illustrated in Figure 6A for a two-cell network: Assume Nᵥᵢᵣₜ = 4; each BS can serve all 3 UEs in its cell but can cancel interference to only one UE in a neighboring cell in each resource block; two UEs in the neighboring cell will still suffer from interference. If it is desired, in such a situation, that interference everywhere in the network is cancelled, then the value Nᵥᵢᵣₜ needs to be adapted dynamically according to the number of allocated UEs. In that case, Nᵥᵢᵣₜ = N1 + N; if interference cancellation for all UEs is desired; then Nᵥᵢᵣₜ should have the value Nᵥᵢᵣₜ = 6. Nᵥᵢᵣₜ may vary fast according to the number of UEs in each resource block over the network; in the scenario of Figure 6B, which shows that one UE in each cell is scheduled additionally compared to the scenario of Figure 6A, Nᵥᵢᵣₜ should have the value Nᵥᵢᵣₜ = 8.

If UEs have R antennas each, then the equalities are set to (N1 + N2) R = Nᵥᵢᵣₜ for the static case and Nᵥᵢᵣₜ = (N1 + N) R for the dynamic case.

It will be readily apparent to the skilled person that the methods, the elements, units and apparatuses described in connection with embodiments of the invention may be implemented in hardware, in software, or as a combination of both. In particular it will be appreciated that the embodiments of the invention and the elements of modules described in connection therewith may be implemented by a computer program or computer programs running on a computer or being executed by a microprocessor. Any apparatus implementing the invention may in particular take the form of a computing device acting as an apparatus for measuring channel state information in a cellular network system using MIMO.

## Claims

1. A method for measuring channel state information in a cellular network system using MIMO,
wherein a user equipment UE is connected to a first base station BS, said method comprising:
informing the first BS about the respective number of antennas of one or more neighbouring BSs of said first BS;
signalling the number of antennas of neighbouring BSs of said first BS from said first BS to said UE;
receiving training pilot signals from said neighbouring BSs by said UE;
performing channel state information CSI measurements based on said pilots received from said neighbouring BSs;
feeding back the CSI to said first BS.

2. The method according to claim 1, wherein the informing the first BS about the respective number of antennas of the one or more neighbouring BSs is done
by signalling from the neighbouring BSs to the first BS preferably through a backhaul network, or
by signalling through a central network controller or through Operation, Administration, and Management, OAM.

3. The method of claim 1 or 2, further comprising:
signalling the number of antennas of neighbouring BSs of said first BS from said first BS to said UE on radio resource elements on which pilot signals are to be transmitted;
receiving said training pilot signals from said neighbouring BSs by said UE on said radio resource elements signalled from said first BS to said UE.

4. The method according to any of the previous claims, wherein the signalling is performed using a radio resource control, RRC, protocol.

5. The method according to claim 4, wherein the signalled information includes one or more of the following:
- information indicating if pilots of neighbouring BSs should be measured;
- a cell ID for neighbouring BSs;
- a number of virtual antennas for neighbouring BSs; a measurement configuration;
- feedback channel information.

6. The method according to any of the previous claims, wherein information about neighbouring BSs is signalled to the UE through layer 1 / layer 2 protocols, wherein said information includes one or more of the following:
- a measurement trigger;
- an identifier of the neighbouring BSs to be measured;
- information about when to expect pilots from neighbouring BSs;
- information on which radio resource elements to expect pilots from neighbouring BSs.

7. The method according to any of the previous claims, where the resource elements for receiving the CSI of said neighbouring BSs are determined implicitly by said UE or are predefined, preferably using L1/L2 signalling for data allocation as implicit trigger.

8. The method according to any of the previous claims, where the resource elements for feeding back the CSI to said first BS are determined implicitly by said UE or are predefined, preferably using L1/L2 signalling for data allocation as implicit trigger.

9. The method according any of the previous claims, wherein the number of antennas is a number of virtual antennas which is smaller than a number of physical antennas.

10. Method according to one of the previous claims, wherein the channel state information CSI fed back to the first BS is a compact CSI based on a number of virtual antennas of a neighbouring base station, which is smaller than a CSI based on a number of physical antennas of the neighbouring base station.

11. The method according to any of the previous claims, wherein the first BS transmits said received CSI from said UE through a backhaul network to neighbouring BSs.

12. A user equipment for measuring channel state information in a cellular network system using MIMO,
wherein said user equipment UE is connected to a first base station BS having one or more neighbouring BSs, said user equipment comprising:
a module for receiving the number of antennas of said one or more neighbouring BSs from said first BS, which has received said number of antennas of said one or more neighbouring BSs;
a module for receiving training pilot signals from said neighbouring BSs by said UE;
a module for performing channel state information CSI measurements based on said pilots received from said neighbouring BSs and said number of antennas of said one or more neighbouring BSs received from said first BS;
a module for feeding back the CSI to said first BS.

13. A first base station BS for measuring channel state information in a cellular network system using MIMO, wherein said first base station has one or more neighbouring BSs and is connected to a user equipment, said first base station comprising:
a module for receiving the number of antennas of said one or more neighbouring BSs;
a module for transmitting the received number of antennas of said one or more neighbouring BSs from said first BS to said UE to enable said UE to perform channel state information CSI measurements based on pilots received from said neighbouring BSs and said number of antennas of said one or more neighbouring BSs received from said first BS;
a module for receiving CSI from said user equipment, which has performed CSI measurements based on said pilots received from said neighbouring BSs and said number of antennas of said one or more neighbouring BSs received from said first BS.

14. The apparatus of claim 13 or 14, further comprising means for performing a method according to one of claims 1 to 11.

15. A computer program comprising computer program code which when being executed on a computer enables said computer to carry out a method according to one of claims 1 to 11.
